Europäisches Patentamt

European Patent Office

Office européen des brevets

(11) Veröffentlichungsnummer: **0 126 188**
A2

# (12) EUROPÄISCHE PATENTANMELDUNG

(21) Anmeldenummer: 83113241.0

(22) Anmeldetag: 30.12.83

(51) Int. Cl.³: **F 16 D 13/71**

(30) Priorität: 16.05.83 HU 168983

(43) Veröffentlichungstag der Anmeldung: 28.11.84
Patentblatt 84/48

(84) Benannte Vertragsstaaten: **AT BE CH DE FR GB IT LI LU NL SE**

(71) Anmelder: **Csepel Autogyár, Pf. 38,
H-2311 Szigetszentmiklos (HU)**

(72) Erfinder: **Töröcsik, Lászio, Dipl.-Ing., Kakukk u. 10/b,
H-1126 Budapest (HU)**
Erfinder: **Geiger, Gyula, Dipl.-Ing., Marx Károly u. 131,
H-1202 Budapest (HU)**
Erfinder: **Kovacs, István, Dipl.-Ing., Radnoti u. 5/16,
H-2310 Szigetszentmiklos (HU)**
Erfinder: **Nagy, István, Dipl.-Ing., Gyoni u. 20,
H-2330 Dunaharaszti (HU)**

(74) Vertreter: **Patentanwälte Viering & Jentschura,
Steinsdorfstrasse 6, D-8000 München 22 (DE)**

(54) **Reibscheibenkupplung mit einer Membranfeder.**

(57) Reibscheibenkupplung mit einer Membranfeder, insbesondere für Kraftfahrzeuge, mit einer oder zwei Reibscheiben, bei der an dem Kupplungsgehäuse außerhalb des Reibscheibenumfanges mindestens drei Augen vorgesehen sind, an die bei der Einscheiben-Ausführung eine, bei der Zweischeiben-Ausführung zwei Druckplatten mittels an sich bekannter Gelenkfedern verankert sind, wobei bei der Zweischeiben-Ausführung mindestens drei zweiarmige im wesentlichen proportional verteilte angeordnete Hebel vorgesehen sind, deren eines Ende an das Kupplungsgehäuse und deren anderes Ende an die mit der Membranfeder in unmittelbarer Berührung befindliche Druckplatte verdrehbar angeschlossen sind. Der angegebene dazwischenliegende Angriffspunkt des zweiarmigen Hebels ist mit der anderen Druckplatte verbunden und zwischen der Membranfeder und der mit ihr in Berührung stehenden Druckplatte besteht eine Zwangsverbindung.

Anwaltsakte 4447

## Reibscheibenkupplung mit einer Membranfeder

Die Erfindung bezieht sich auf eine mit einer Membranfeder ausgestattete Reibscheibenkupplung, die im Baukastenprinzip entweder als Ein- oder Zweischeiben-Ausführung ausgeführt werden kann.

Bei Verbrennungsmotoren reicht es im allgemeinen aus, wenn in der Kupplung nur eine Reibscheibe vorhanden ist. In gewissen Fällen wird jedoch die Verwendung von zwei Reibscheiben erforderlich, da dies die zur Verfügung stehenden Einbaumaße bzw. die Belastung erfordern.

Die meisten der mit Membranfeder ausgeführten Zweischeibenkupplungen basieren auf einer von den Einscheibenkupplungen unabhängig entwickelten selbstständigen Konstruktion. Derartige Lösungen sind aus der britischen Patentschrift GB 1 593 180, den USA-Patentschriften 3,749,213 und 4,238,019 oder der ungarischen Patentschrift 177,206 ersichtlich. Bei diesen ist die Membranfeder zwischen den beiden Druckplatten angeordnet, und drückt die eine Reibscheibe an ein Schwungrad und die andere an das Kupplungsgehäuse. Die Druckplatten werden durch separate Ausrückhebel betätigt und diese sichern

II/p                                                                -2-

das gleichzeitige Abheben der beiden Druckplatten.

Die wenigsten der Zweischeibenkupplungen sind aus der Einscheibenausführung entwickelt worden. Eine derartige Lösung ist z.B. in der USA-Patentschrift 3.797,622 oder in der deutschen Patentschrift 2 656 626 beschrieben. Bei diesen ist an die aus Membranfeder, Druckplatte und Reibscheibe bestehenden Kupplung in dieser Reihenfolge eine weitere Druckplatte und eine Reibscheibe angebaut. Das Ausrücken der Kupplung erfolgt auf herkömmliche Weise, d.h. die Membranfeder wird durch den Ausrückring betätigt. Das Abheben der mit der Membranfeder in Berührung stehenden Druckplatte von der Reibscheibe erfolgt ebenfalls mit Hilfe von herkömmlichen Bauelementen, das Abheben der zweiten Druckplatte ist jedoch durch keine Zwangsverbindung gesichert und so erfolgt das Ausrücken der beiden Reibscheiben nicht gleichzeitig, weshalb die eine Reibscheibe einem schnelleren Verschleiß unterliegt.

Die bisher bekannten Zweischeibenkupplungs-Ausführungen sind demgemäß entweder selbstständige Konstruktionen, die jedoch wegen des stückzahlenmäßig geringen Bedarfes wirtschaftlich nur unvorteilhaft und in ihrer Ausführung kompliziert gefertigt werden oder sie sind aus der Einscheibenausführung entwickelt und in ihrer Funktion unvollkommen.

Ziel der Erfindung ist die Entwicklung einer mit einer Membranfeder ausgestatteten Reibscheibenkupplung, bei der die Einscheiben- und die Zweischeibenkupplung nach dem gleichen Prinzip aufgebaut ist, d.h. daß aus der Einscheibenkupplung durch Hinzufügung einiger Bauelemente auf einfache Weise eine Zweischeibenkupplung aufgebaut werden kann, wobei das gleichzeitige Ausrücken der beiden Reibscheiben in zufriedenstellender Weise erfolgt. Die Erfindung beruht auf der Erkenntnis, daß durch den Einsatz entsprechender mechanischer Bauelemente die mit der Membranfeder in Berührung stehende Druckplatte in der Lage ist, proportional zu ihrer Bewegung die andere Druckplatte ebenfalls zu verschieben.

Die Erfindung ist demgemäß eine, insbesondere für Kraftfahrzeuge geeignete und mit einer Membranfeder ausgestattete Kupplung, die mit einer oder zwei Reibscheiben gebaut werden kann, wobei an dem Kupplungsgehäuse außerhalb des Reibscheibenumfanges mindestens drei Augen vorgesehen sind, an die bei der Einscheiben-Ausführung eine, bei der Zweischeiben-Ausführung zwei Druckplatten mittels an sich bekannter Gelenkfedern verankert sind. Ferner sind bei der Zweischeiben-Ausführung mindestens drei zweiarmige, im wesentlichen proportional verteilt angeordnete Hebel vorgesehen, deren Enden einerseits an das Kupplungsgehäuse, andererseits an die mit der Membranfeder in unmittelbarer Berührung befindliche Druckplatte verdrehbar angeschlossen sind. Der dritte Angriffspunkt des zweiarmigen Hebels ist mit der anderen Druckplatte verbunden und schließlich ist zwischen der Membranfeder und der mit ihr in Berührung stehenden Druckplatte eine Zwangsverbindung vorgesehen.

Bei einer vorteilhaften Ausführungsform der erfindungsgemäßen Kupplungs-Baureihe ist das eine Ende des zweiarmigen Hebels an das gleiche Auge der Druckplatte angeschlossen, mittels der die Druckplatte über die Gelenkfeder an das Kupplungsgehäuse verankert ist.

Bei einer anderen vorteilhaften Ausführungsform der erfindungsgemäßen Kupplungs-Baureihe ist mittels eines Verbindungselementes der genannte Angriffspunkt des zweiarmigen Hebels und die mit diesem in Zwangsverbindung befindliche Druckplatte verbunden und mindestens bei einem der beiden Teile ist das Verbindungselement nur an der dem anderen Teil entgegengesetzten Seite zum Anschlag gebracht.

4

0126188

Wie zu ersehen, wird der auf dem Baureihen-Prinzip beruhende Aufbau der Ein- und Zweischeibenkupplungs-Baureihe durch die Erfindung auf einfache Weise gesichert, wobei auch das gleichzeitige Ausrücken der beiden Reibscheiben zufriedenstellend gelöst ist.

Die Erfindung wird im folgenden anhand von zwei in der Zeichnung dargestellten Ausführungsformen näher beschrieben. In der Zeichnung zeigt:

Fig. 1    die Draufsicht einer Zweischeiben-Ausführung der erfindungsgemäßen Kupplung mit Membranfeder,

Fig. 2    ein Detail der Seitenansicht der Einscheiben-Ausführung der erfindungsgemäßen Kupplung mit Membranfeder und

Fig. 3    ein Detail der Seitenansicht der Zweischeiben-Ausführung der erfindungsgemäßen Kupplung mit Membranfeder.

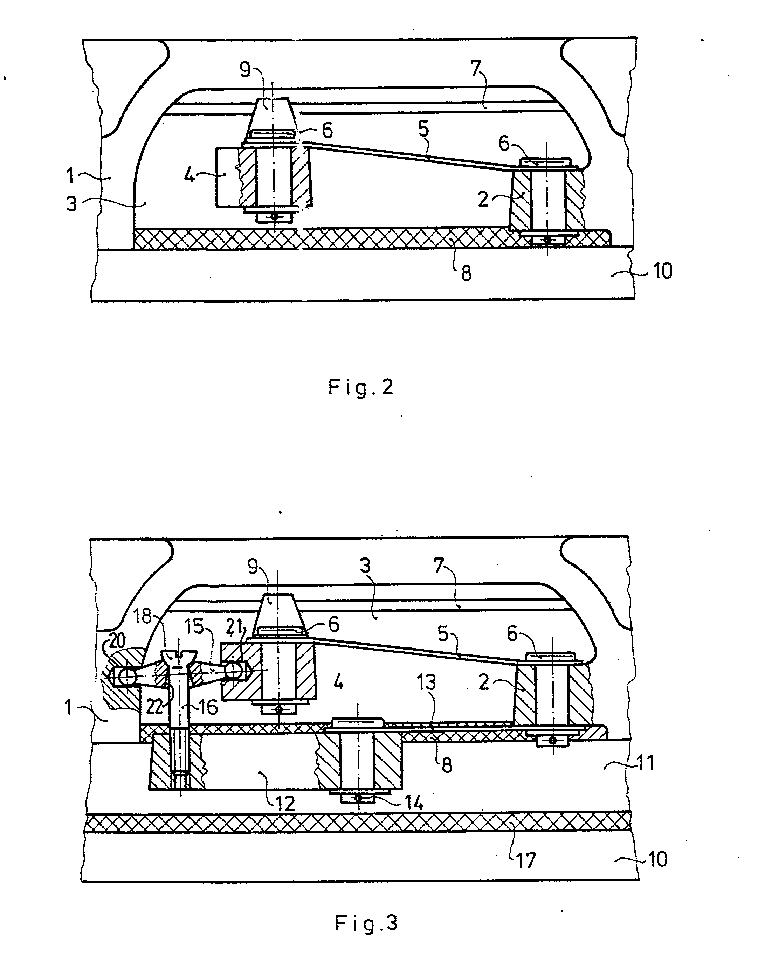

In dem Mantelteil eines Kupplungsgehäuses 1 der in Fig. 2 dargestellten Einscheiben-Kupplung sind mit einer 120°-igen Teilung drei Augen 2 vorgesehen. An jedem der drei Augen 2 ist auf der einem Schwungrad 10 entgegengesetzten Seite mit ihrem einen Ende eine Gelenkfeder 5 befestigt, die mit ihrem anderen Ende an einem Auge 4 einer Druckplatte 3 fixiert ist. Die Befestigung der Gelenkfedern 5 an den Augen 2 und 4 erfolgt über Niete 6. Auf der entsprechend ausgebildeten Stirnfläche der Druckplatte 3 liegt mit ihrem Randflansch eine Membranfeder 7 auf. An der Druckplatte 3 ist mit den Gelenkfedern 5 zusammen je eine aus Blech gebogene Klaue 9 festgenietet, die mit ihrem freien Ende den Randflansch der Membranfeder 7 übergreifend auf diesem aufliegt und so die Membranfeder 7, d.h. deren Randflansch, gegen die Stirnfläche der Druckplatte 3 drückt. Zwischen der Druckplatte 3 und dem Schwungrad 10 ist eine Reibscheibe 8 angeordnet.

Die Kupplung funktioniert wie übliche Kupplungen. Im gekuppelten Zustand drückt die Membranfeder 7 über die Druckplatte 3 die Reibscheibe 8 an das Schwungrad 10, wobei beim Lösen d.h. Ausrücken der Kupplung durch Eindrükken des Zentrums der Membranfeder 7 deren Flansch vom Schwungrad 10 wegbewegt wird und dabei mit Hilfe der Klauen 9 die Druckplatte 3 von der Reibscheibe abhebt, so daß die Reibscheibe freigegeben wird und ein Auskuppeln der Kupplung erreicht wird.

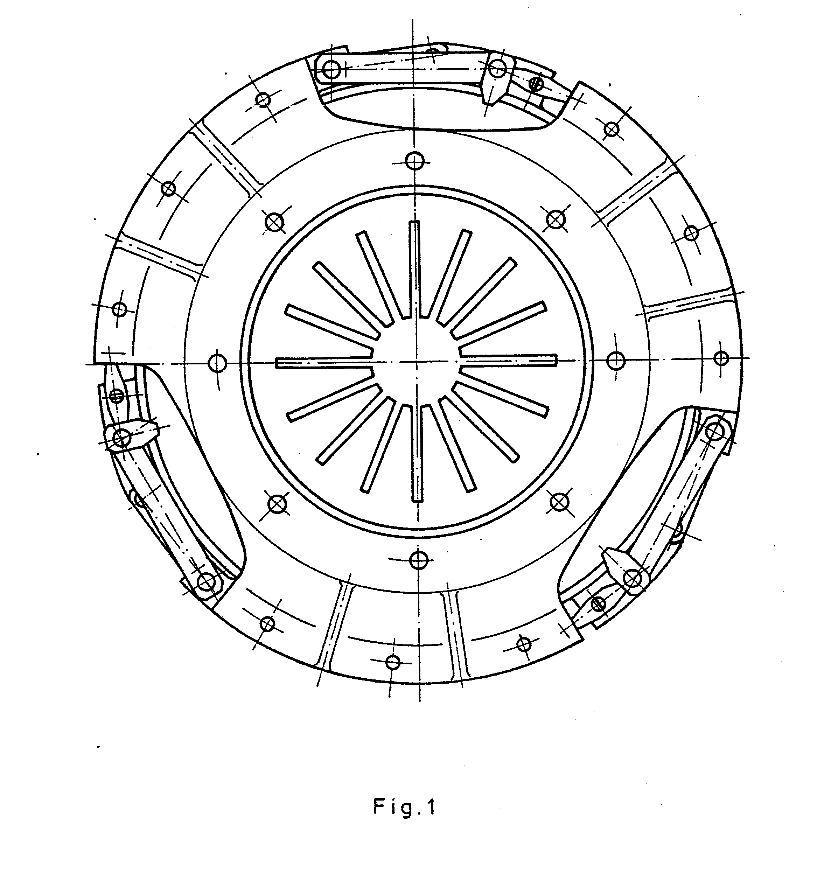

Aus den Fig. 1 und 3 ist die Drauf- bzw. Seitenansicht der unter Verwendung der Bauteile der zuvor dargestellten Einscheibenkupplung aufbaubaren Zweischeibenkupplung ersichtlich.

An den am Kupplungsgehäuse 1 vorgesehenen Augen 2 sind über Gelenkfedern 5 die Druckplatte 3 und über Gelenkfedern 13 die Druckplatten 11 befestigt. Die Gelenkfedern 5 und 13 sind an beiden Stirnenden des Auges 2 angeschlossen und durch den Niet 6 aneinander befestigt.

Die Anordnung der von dem Schwungrad 10 weiter entfernt liegenden Druckplatte 3 und der Membranfeder 7 stimmt mit der zuvor beschriebenen und aus Fig. 2 ersichtlichen Anordnung überein. An der dem Schwungrad 10 näherliegenden Druckplatte 11 ist ein Auge 12 vorgesehen und an diesem ist mittels eines Nietes 14 das andere Ende der Gelenkfeder 13 befestigt. Die Gelenkfeder 13 ist kürzer als die Gelenkfeder 5, kann jedoch durch Änderung der Anordnung auch genauso lang wie die Gelenkfeder 5 ausgebildet werden.

In den an der Druckplatte 3 ausgebildeten Augen 4 und in dem Kupplungsgehäuse 1 sind einander gegenüberliegend Bohrungen 20, 21 eingearbeitet. In diese sind die kugelförmig ausgebildeten Enden eines zweiarmigen Hebels 15 eingesetzt. In der Mitte des zweiarmigen Hebels 15 ist eine zur Längsachse der Kupplung parallele Bohrung 22 vorgesehen, deren der Reibscheibe 8 zugewandter Teil zur Reibscheibe 8 hin sich erweiternd kegelig und deren der Membranfeder 7 zugewandter Teil hohlballig ausgebildet sind, wobei der letztere Teil vorteilhafterweise in etwa ein Drittel der Länge der Bohrung ausmacht. In die Bohrung 22 ist mit einem großen Spiel ein stabförmiges, als Schraube ausbebildetes Verbindungselement 16 eingesetzt, dessen Kopfunterseite ballig ausgebildet ist. Das mit einem Gewinde versehene Ende des Verbindungselementes 16 ist in dem an der Druckplatte 11 vorgesehenen Auge 12 befestigt, während sein anderes, in die Bohrung 22 eingreifendes Ende als Anschlag 18 über den Hebel 15 die Verbindung zwischen Druckplatte 11 und Membranfeder 7 hergestellt.

Zwischen der Druckplatte 11 und dem Schwungrad 10 ist eine zweite Reibscheibe 17 angeordnet. Die Zweischeibenkupplung funktiontiert auf folgende Weise.

Im eingekuppelten Zustand der Kupplung drückt die Membranfeder 7 über die Druckplatte 3 die Reibscheibe 8 an die eine Seite der Druckplatte 11 und so mittelbar die Reibscheibe 17 über die andere Seite der Druckplatte 11 gegen das Schwungrad 10. Auf diese Weise nehmen an der Drehmomentübertragung beide Reibscheiben teil.

Beim Ausrücken entfernt die Membranfeder 7 mit Hilfe der Klaue 9 die Druckplatte 3 vom Schwungrad 10, wobei die Klaue den zweiarmigen Hebel 15 mitnimmt. Der zweiarmige Hebel 15 entfernt mit Hilfe des Verbindungselementes 16 die Druckplatte 11 mit der Druckplatte 3 gleichzeitig und bewirkt demgemäß das stets gleichzeitig erfolgende Auskuppeln der beiden Druckplatten.

Mit Rücksicht darauf, daß beim Einkuppeln dies vorteilhafterweise stets durch die eigene Bewegung der an der Drehmomentübertragung tatsächlich teilnehmenden Bauelemente herbeigeführt wird, ist das Verbindungselement 16 so ausgeführt, daß es nur auf der der Druckplatte 11 entgegengesetzten Seite des zweiarmigen Hebels 15 mit Hilfe des Anschlages 18 zum Anschlag gebracht wird. Auf diese Weise vollführt das Entfernen, d.h. das Abheben der Druckplatte 11 durch den zweiarmigen Hebel 15 die Annäherung, das Anpressen an das Schwungrad 10 hingegen über die Reibscheibe 8.

Der aus dem zweiarmigen Hebel 15 und dem Verbindungselement 16 bestehende Mechanismus kann auch so ausgelegt werden, daß das eine Ende des Verbindungselements 16 an den zweiarmigen Hebel 15 angelenkt, jedoch das andere Ende an der Druckplatte 11 in bekannter Weise mittels einer Reibverbindung befestigt werden, die bei Erreichen einer das festgelegte Maß, überschreitenden axialen Kraft eine Bewegung des Endes des Verbindungselementes 16 im Vergleich zur Druckplatte 11 erlaubt. Diese Ausführungsform bringt auch einen Ausgleich der durch einen eventuell ungleichmäßigen Verschleiß der Reibscheiben auf das Maß des Auskuppelns ausgeübten Wirkung.

6188

8

Patentansprüche

1. Reibscheibenkupplung mit einer Membranfeder, insbesondere für Kraftfahrzeuge, mit einer oder zwei Reibscheiben, dadurch gekennzeichent, daß auf dem Kupplungsgehäuse (1) außerhalb des Reibscheibenumfanges mindestens drei Augen (2) vorgesehen sind, an die bei der Einscheibenausführung eine, bei der Zweischeibenausführung zwei Druckplatten (3) bzw. (11) mittels an sich bekannter Gelenkfedern (5, 13) befestigt sind, daß bei der Zweischeibenausführung mindestens drei zweiarmige im wesentlichen proportional verteilt angeordnete Hebel (15) vorgesehen sind, von deren Enden das eine an das Kupplungsgehäuse (1), und das andere an die mit der Membranfeder (7) unmittelbar in Berührung stehende Druckplatte (3) verdrehbar angeschlossen sind, wobei ein dazwischenliegender Angriffspunkt des zweiarmigen Hebels (15) mit der andere Druckplatte (11) verbunden ist (16, 18), und daß zwischen der Membranfeder (7) und der mit ihr in Berührung stehenden Druckplatte (3) eine Zwangsverbindung vorgesehen ist.

2. Reibscheibenkupplung nach Anspruch 1 dadurch gekennzeichnet, daß das eine Ende des zweiarmigen Hebels 15 an das gleiche Auge (4) der Druckplatte (3) angeschlossen ist, mittels der die Druckplatte (3) über die Gelenkfeder (5) an das Kupplungsgehäuse (1) befestigt ist.

3. Reibscheibenkupplung nach Anspruch 1 bzw. 2 dadurch gekennzeichnet, daß der genannte Angriffspunkt des zweiarmigen Hebels (15) und die mit ihm in Zwangsverbindung befindliche Druckplatte (11) mittels eines Verbindungselementes (16) verbunden ist und mindestens an einem der beiden Teile das Verbindungselement (16) nur auf der dem anderen entgegengesetzten Seite zum Anschlag (18) gebracht wird.

1/2

0126188

Fig.1

0126188

Fig.2

Fig.3